# EUROPÄISCHE PATENTSCHRIFT

(11) **EP 1 803 617 B1**
(45) Veröffentlichungstag und Bekanntmachung des Hinweises auf die Patenterteilung: **05.10.2011**
(21) Anmeldenummer: 06124459.6
(22) Anmeldetag: 21.11.2006
(51) Int. Cl.: B60R 22/46

(54) **Sicherheitsgurt-Vorrichtung mit einem elektromotorischen Gurtstraffer**
Seat belt device with an electric motor driven belt tensioner
Dispositif de ceinture de sécurité doté d'un dispositif de serrage électromoteur

(30) Priorität: 28.12.2005 DE 102005062780
(43) Veröffentlichungstag der Anmeldung: 04.07.2007
(73) Patentinhaber: ROBERT BOSCH GMBH, 70442 Stuttgart (DE)
(72) Erfinder: Moench, Jochen, 76547 Sinzheim (DE); Bernard, Pierre, 77815 Buehl (DE); Fricker, David, 67500 Hagenau (FR)

(56) Entgegenhaltungen:
- WO-A-2004/014704
- DE-A1- 4 314 176
- DE-A1- 4 332 205
- DE-U1- 9 403 366

## Beschreibung

### Stand der Technik

Die Erfindung betrifft eine Sicherheitsgurt-Vorrichtung mit einem mittels eines Elektromotors betriebenen Gurtstraffer, nach der Gattung des unabhängigen Anspruchs.

Mit der EP 1495 926 A1 ist eine Sicherheitsgurt-Vorrichtung für Kraftfahrzeuge bekannt geworden, die einen Sicherheitsgurt, einen Gurtaufroller, sowie einen elektromotorischen Antrieb für den Aufroller aufweist. Der Elektromotor ist mit einem mechanischen Energiespeicher gekoppelt, wobei der Motor in Abhängigkeit von einem Ansteuersignal wahlweise entweder in einem vom Gurtaufroller entkoppelten Speichermodus zum Füllen des Energiespeichers oder in einem Aufwickelmodus des Gurtaufrollers betreibbar ist. Der Elektromotor ist hierbei außerhalb des Gehäuses des Gurtaufrollers angeordnet und nimmt einen Bauraum ein, der in etwa dem Bauraum der eigentlichen Sicherheitsgurt-Vorrichtung entspricht. Daher kann eine solche Ausführung nur in relativ großen Kraftfahrzeugen eingebaut werden, die genügend Bauraum in der B-Säule der Karoserie zur Verfügung stellen. Außerdem muss zum Betätigen des Gurtstraffers eine relativ große träge Masse des Systems beschleunigt werden, wodurch der Gurtstraffer relativ träge wird.

Mit der WO 2004/014704 A ist ein selbstsperrender Sicherheitsgurtaufroller bekannt geworden, bei dem innerhalb einer Gurtwelle, auf der der Gurt aufgewickelt ist, der Rotor eines Elektromotors angeordnet ist. Die Gurtwelle dient hierbei als Stator des Elektromotors. Der Rotor ist hierbei direkt über eine einen Freilauf bildenden Rücklaufsperre mit der Gurtwelle gekoppelt. Die WO01/14176 zeigt ein selbsthemmungsfreies Planetengetriebe in einer ähnlichen Einbausituation zwischen Gurtwelle und E-motor

### Offenbarung der Erfindung

Die erfindungsgemäße Vorrichtung hat den Vorteil, dass durch die Integration des Elektromotors in die Gurtrolle der Bauraum für die Sicherheitsgurt-Vorrichtung mit motorischem Gurtstraffer deutlich reduziert wird. Dadurch kann das System auch in kleineren Fahrzeugen eingebaut werden, die eine schmalere B-Säule der Kraftfahrzeugkarosserie aufweisen.

Durch die Anordnung des Rotors innerhalb der Gurtrolle mit einem relativ kleinen Außendurchmesser weist der Rotor ein geringes Trägheitsmoment auf, wodurch die für die Pre-Crash-Situation erforderliche Dynamik des Gurtstraffers erhöht werden kann. Dadurch kann der Gurt in sehr kurzer Zeit auch ohne Bereitstellung eines Energiespeichers den Sicherheitsgurt entsprechend vorspannen. Zwischen der Rotorwelle und der Gurtrolle ist ein Getriebe angeordnet, dessen Übersetzungsverhältnis dem Kraftbedarf bzw. der zur Verfügung stehenden Zeit des Gurtstraff-Vorgangs angepasst werden kann. Das Getriebe weist dabei keine Selbsthemmung auf, damit im Normalbetrieb beim Ziehen am Sicherheitsgurt das Getriebe und der Motor mit möglichst geringer Reibung mit dreht. Ein hoher Wirkungsgrad des Getriebes hat den weiteren positiven Effekt, dass die Fahrzeugbatterie im Pre-Crash-Fall weniger beansprucht wird.

Durch die in den Unteransprüchen aufgeführten Merkmale sind vorteilhafte Weiterbildungen der Vorrichtung nach den unabhängigen Ansprüchen möglich.

So können auf der Rotorwelle günstiger Weise elektrische Wicklungen angeordnet sein, die mit einem Kommutator verbunden sind. Das korrespondierende Bürstensystem und die entsprechende Permanentmagneten können an der Innenseite der Gurttrolle angeordnet werden. Dadurch bildet die Gurtrolle quasi einen Stator für einen Innenläufer-Motor.

Sind an der Gurtrolle mehrere Magnete befestigt, kann deren magnetischer Fluss vorteilhaft durch ein magnetisches Rückschlusselement verstärket werden, das durch die Gurtrolle gebildet wird. Wird die Gurtrolle direkt aus einem "magnetisch leitfähigem" Material hergestellt, wird für den magnetischen Rückfluss kein zusätzlicher Bauraum benötigt.

Die Stromversorgung des Bürstensystems erfolgt besonders günstig über Schleifkontakte zwischen dem Bürstensystem und dem Gehäuse, da sich sowohl der Rotor als auch die Gurtrolle bzgl. des Gehäuses während des Straffens des Sicherheitsgurts verdrehen. Dabei kann am Gehäuse ein standardisierter Stecker für die Stromzufuhr angeformt werden.

In das Schleifringsystem lässt sich besonders einfach eine

Positionserfassungseinrichtung integrieren, durch den sich über die Anordnung eines Signalgebers und eines Signalempfängers die Drehlage der Gurtrolle bzgl. des Gehäuses bestimmen lässt.

Weist das Fahrzeug ein Pre-Crash-System mit weiteren Sensoren auf, die beispielsweise die Lage des Sitzes, des Lenkrads und der Pedale erfassen, kann aus diesen Daten die Länge des abgerollten Sicherheitsgurts und dadurch die Ausmaße und das Gewicht der Insassen bestimmt werden. Diese Informationen können wiederum für die korrekte

Auslösung der Crash-Schutzsystem zugrunde gelegt werden.

Um eine bestimmte Vorspannkraft für das Straffen des Gurts vorzugeben, kann der maximale Motorstrom des Elektromotors entweder fest - oder variabel einstellbar - vorgegeben werden.

In einer alternativen Ausführung ist der mindestens eine Permanentmagnet auf der Ankerwelle befestigt und die elektrischen Wicklungen an der Innenwand der Gurtrolle angeordnet. Der Motorstrom wird wieder über Schleifkontakte vom Gehäuse an die Innenseite der Gurtrolle zu den elektrischem Wicklungen geführt, wobei diese beispielsweise elektrisch kommutiert werden.

Von Vorteil ist hierbei die Verwendung eines Planetengetriebes, bei dem ein auf der Rotorwelle angeordnetes Sonnenrad ein oder mehrere Planetenräder antreibt, die an der Gurtrolle als Steg drehbar gelagert sind. Die Planetenräder rollen auf einem Gehäusefesten Hohlrad ab, sodass das Antriebsmoment des Elektromotors mit einem vorgebbaren Übersetzungsverhältnis auf die Gurtrolle übertragen wird.

In einer weiteren Ausführung ist das Getriebe als Wolfromgetriebe ausgebildet, bei dem an der Gurtrolle ein zweites Hohlrad angeordnet ist, das gegenüber dem gehäusefesten Hohlrad eine unterschiedliche Zähnezahl aufweist. Die Planetenräder rollen dabei gleichzeitig in beiden Hohlrädern ab, sodass durch den Zahnzahlunterschied das Versetzungsverhältnis zwischen dem Rotor und der Gurtrolle vorgebbar ist. Dadurch kann ein sehr großer Übersetzungsbereich, zwischen etwa 1:15 und 1:150 realisiert werden, wobei der Wirkungsgrad hierbei deutlich über 50 % liegt. Dadurch kann ein sehr kompaktes Getriebe ohne Selbsthemmung erzielt werden.

Durch die drehbare Anordnung der Rotorwelle im Gehäuse und der drehbaren Lagerung der Gurtrolle auf der Rotorwelle wird die Drehgeschwindigkeit der Gurtrolle beim Gurtstraffen allein durch das Getriebeverhältnis vorgegeben.

Der Kommutator des Elektromotors kann je nach Bauraumverhältnissen als axialer PlanKommutator oder als radialer Trommel-Kommutator gefertigt werden, wobei das Bürstensystem entsprechend axial oder radial dazu positioniert wird.

### Zeichnungen

In den Zeichnungen sind Ausführungsbeispiele einer erfindungsgemäßen Vorrichtung dargestellt und in der nachfolgenden Beschreibung näher erläutert. Es zeigen
- Figur 1: einen Schnitt durch ein Ausführungsbeispiel einer erfindungsgemäßen Sicherheitsgurt-Vorrichtung, und
- Figur 2: eine Variation gemäß der Ausführung aus Figur 1.

### Beschreibung der Ausführungsbeispiele

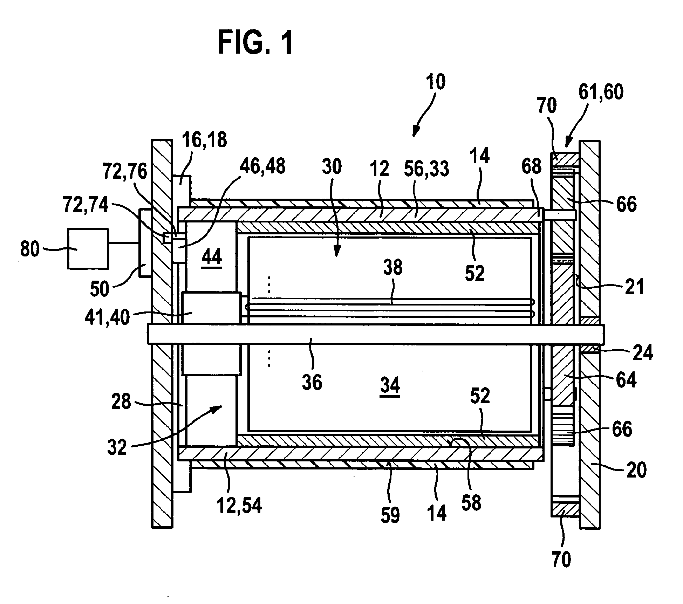

In Figur 1 ist schematisch eine Sicherheitsgurt-Vorrichtung 10 dargestellt, bei der eine Gurtrolle 12 zum Aufrollen eines Sicherheitsgurts 14 und eine Gurtfeder 16 mit integrierter Gurtsperre 18 innerhalb eines Gehäuses 20 angeordnet sind. Die Gurtfeder 16 mit der integrierten Gurtsperre 18 entspricht der Ausführung eines herkömmlichen Sicherheitsgurts ohne Gurtstraffer. Dabei ist die Gurtrolle 12 drehbar im Gehäuse 20 gelagert, beispielsweise mittels Wälzlager 24. In die Gurtrolle 12 ist ein Gurtstraffer 30 integriert, der beim Auftreten eines Crashs die Gurtrolle 12 schnell in Drehung versetzt, um den Sicherheitsgurt 14 zu straffen, damit der Fahrzeuginsasse während des Crashverlaufs möglichst fest am Fahrzeugsitz angebunden bleibt.

Der Gurtstraffer 30 wird durch einen Elektromotor 32 betrieben, der innerhalb der Gurtrolle 12 angeordnet ist. Der Elektromotor 32 weist einen Rotor 34 auf, der konzentrisch zur Gurtrolle 12 auf einer Rotorwelle 36 gelagert ist. Auf den Rotor 34 sind elektrische Wicklungen 38 gewickelt, die über einen Kommutator 40 bestromt werden. Der Kommutator 40 ist beispielsweise als Trommelkommutator 41 auf der Rotorwelle 36 befestigt, und wirkt mit Kohlebürsten 44 zusammen, die radial zum Kommutator 40 an der Gurtrolle 12 befestigt sind. Da die Gurtrolle 12 drehbar im Gehäuse 20 gelagert ist, erfolgt die Stromversorgung der Kohlebürsten 44 über ein Schleifringsystem 46, bei dem die an einem Stecker 50 des Gehäuses 20 anliegende elektrische Versorgung über einen Schleifring 48, der an der drehbaren Gurtrolle 12 befestigt ist, übertragen wird. Die bestromten Wicklungen 38 werden durch ein Magnetfeld in Rotation versetzt, das durch Permanetmagneten 52 erzeugt wird, die an der Gurtrolle 12 befestigt sind. Die Gurtrolle 12 mit ihrem Zylindermantel 33 stellt hierbei einen Stator 54 für den Elektromotor 32 dar, wobei der Zylindermantel 33 gleichzeitig als magnetisches Rückschlusselement 56 wirkt. Hierzu ist der Zylindermantel 33 aus einem magnetisierbaren Material, beispielsweise aus Eisen gefertigt. Die Magnete 52 sind an einer Innenwand 58 des Zylindermantels 33 angeordnet, während auf einer Außenwand 59 der Sicherheitsgurt 14 aufgewickelt ist. Die Permanentmagnete 52 sind als mehrere schalenförmige Teile aus Ferrit- oder Seltene-Erden-Werkstoffe gefertigt, können in einer alternativen Ausführung aber auch als einteiliger hülsenförmiger Magnet 52 ausgebildet sein. Zwischen der drehbar im Gehäuse 20 gelagerten Rotorwelle 36 und der Gurtrolle 12 ist axial benachbart zur Gurtrolle 12 ein selbsthemmungsfreies Getriebe 60 angeordnet, das das erzeugte Drehmoment in eine entsprechende Drehbewegung der Gurtrolle 12 umsetzt. Die Gurtrolle 12 ist hierzu drehbar auf der Rotorwelle 36 gelagert, beispielsweise über seitliche Stirnflächen 28. Das Getriebe 60 ist bei dieser Ausführung als Planetengetriebe 61 ausgelegt und weist einen Wirkungsgrad über 50 % auf. Auf der Rotorwelle 36 ist ein Sonnenrad 64 drehfest angeordnet, das beispielsweise mit drei Planetenrädern 66 kämmt. Die Planetenräder 66 sind an der als Steg 68 wirkenden Gurtrolle 12 drehbar gelagert und wälzen sich in einem gehäusefesten Hohlrad 70 ab. Die Getrieberäder 64, 66, 70 sind vorzugsweise als Kunststoffspritzgussteile gefertigt und sind flachbauend zwischen der Gurtrolle 12 und einer Innenseite 21 des Gehäuses 20 angeordnet, und weisen sie z.B. eine Dicke von nur 2-5 mm auf. Im Ausführungsbeispiel sind die Getrieberäder 64, 66, 70 als Zahnräder ausgebildet, wobei das Verhältnis deren Zähneanzahl das entsprechende Übersetzungsverhältnis bestimmt. Die Sicherheitsgurt-Vorrichtung 10 weist eine Positionserfassungseinrichtung 72 auf, die hier in das Schleifringsystem 46 integriert ist. Dazu ist am Gehäuse 20 ein Signalempfänger 74 angeordnet, der Signale von - mit der Gurtrolle 12 rotierenden - Signalgebern 76 detektiert. Die Positionserfassung 72 ermittelt in Verbindung mit weiteren Positionssignalen, beispielsweise des Sitzes, des Lenkrads oder der Pedale, die Länge des abgerollten Sicherheitsgurts 14. Aus diese Daten können in einer Elektronikeinheit 80 Informationen über die Größe, das Gewicht und die Proportionen der Insassen gewonnen werden, wodurch die Auslösung eines Airbag-Systems gesteuert werden kann. Der Gurtstraffer 30 wird im Regelfall durch einen Pre-Crash-Sensor aktiviert, so dass der Sicherheitsgurt 14 durch den Elektromotor 32 innerhalb von Sekundenbruchteilen derart angespannt wird, dass der Insasse vor dem eigentlichen Crash relativ fest am Sitz fixiert ist. Die hierbei aufzuwendende Vorspannkraft auf den Sicherheitsgurt 14 wird durch die Höhe des maximalen Motorstroms bestimmt, der beispielsweise durch eine Elektronikeinheit 80 vorgebbar ist.

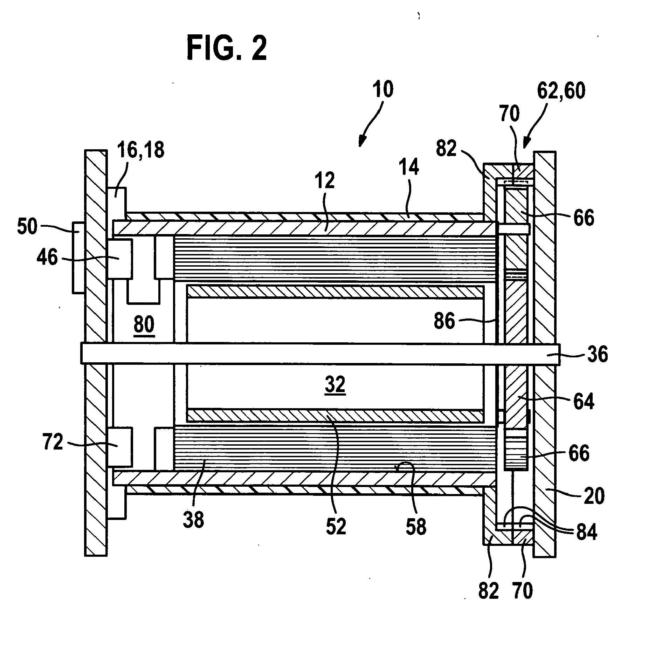

In der Ausführung gemäß Figur 2 sind die Permanentmagnete 20 auf der Rotorwelle 36 befestigt. Die elektrischen Wicklungen 38 sind an der Innenwand 58 der Gurtrolle 12 fixiert und werden elektrisch kommutiert. Hierzu ist die Elektronikeinheit 80 innerhalb der Gurtrolle 12 angeordnet, der auch die Signale der Positionserfassungseinrichtung übermittelt werden. Als Getriebe 60 ohne Selbsthemmung ist hier ein Wolfromgetriebe 62 an der Innenseite 21 des Gehäuses 20 angeordnet, um das Drehmoment von der Rotorwelle 36 auf die Gurtrolle 12 zu übertragen. An der Gurtrolle 12 ist ein zweites Hohlzahnrad 82 drehfest fixiert, das koaxial zum gehäusefesten Hohlrad 70 angeordnet ist. Die Planetenräder 66 erstrecken sich axial über beide Hohlzahnräder 70, 82 und wälzen sich zeitgleich in beiden Hohlzahnräder 70, 82 ab. Die Planetenräder 66 sind insbesondere auf einem separaten Steg 86 gelagert, der auf der Rotorwelle 36 angeordnet ist. Die beiden Hohlzahnräder 70, 82 weisen eine unterschiedliche Anzahl von Innenzähnen 84 auf, die das Übersetzungsverhältnis bestimmen, das beispielsweise im Bereich zwischen 1:15 und 1:150 liegt.

Es sei angemerkt, dass hinsichtlich der in den Figuren und der Beschreibung dargestellten Ausführungsbeispiele vielfältige Kombinationsmöglichkeiten der einzelnen Merkmale untereinander möglich sind. So kann beispielsweise die konkrete Ausgestaltung des Magneten 52, der elektrischen Wicklungen 38 und der Kommutator 40 den entsprechenden Anforderungen angepasst werden. Beispielsweise kann der Kommutator 40 als Trommelkommutator 41, als axialer Plankommutator oder als elektrische Kommutierung realisiert werden. Ebenso kann die Ausführung des Getriebes 60 mit den entsprechenden Getrieberädern 64, 66, 70, 82 im Rahmen des erfindungsgemäßen Gesamtkonzepts verändert werden. Gegebenenfalls kann der reversible Pre-Save-Gurtstraffer 30 auch mit pyrotechnischen Elementen kombiniert werden.

## Patentansprüche

1. Sicherheitsgurt-Vorrichtung (10) für ein Kraftfahrzeug, umfassend ein Gehäuse (20), eine drehbar im Gehäuse gelagerte Gurtrolle (12) zum Aufwickeln eines Sicherheitsgurts (14), eine Gurtfeder (16) mit einer Gurtsperre (18), sowie einen mittels eines Elektromotors (32) betätigbaren Gurtstraffer (30) zur Erzeugung einer Gurtvorspannung, wobei der Elektromotor (32) innerhalb der Gurtrolle (12) angeordnet ist,
und innerhalb der Gurtrolle (12) ein Rotor (34) des Elektromotors (32) mit einer Rotorwelle (36) angeordnet ist, die gegenüber der Gurtrolle (12) drehbar ist, **dadurch gekennzeichnet, dass**
der Rotor (34) über ein selbsthemmungfreies Getriebe (60) mit der Gurtrolle (12) wirkverbunden ist, und das Getriebe (60) ein gehäusefestes Hohlzahnrad (70) aufweise, und mindestens ein Planetenzahnrad (66) drehbar an der als Steg (68) dienenden Gurtrolle (12) gelagert ist, und das mindestens eine Planetenrad (66) mit einem auf der Rotorwelle (36) drehfest angeordnetem Sonnenrad (64) kämmt

2. Sicherheitsgurt-Vorrichtung (10) nach Anspruch 1, **dadurch gekennzeichnet, dass** auf dem Rotor (34) elektrische Wicklungen (38) mit einem Kommutator (40) angeordnet sind, und an der Gurtrolle (12) mindestens ein Stator-Magnet (52) und ein Bürstensystem (44) befestigt sind.

3. Sicherheitsgurt-Vorrichtung (10) nach Anspruch 2, **dadurch gekennzeichnet, dass** die Stator-Magnete (52) direkt an einer Innenwand (58) der Gurtrolle (12) anliegen, und die Gurtrolle (12) als ein magnetisches Rückschlusselement (56) ausgebildet ist.

4. Sicherheitsgurt-Vorrichtung (10) nach einem der vorhergehenden Ansprüche,
**dadurch gekennzeichnet, dass** an der Gurtrolle (12) ein Schleifringsystem (46) angeordnet ist, das eine elektrische Verbindung für einen Motorstrom zwischen dem karosseriefesten Gehäuse (20) und einem dem gegenüber drehbar angeordneten Bürstensystem (44) herstellt.

5. Sicherheitsgurt-Vorrichtung (10) nach einem der vorhergehenden Ansprüche,
**dadurch gekennzeichnet, dass** zwischen der Gurtrolle (12) und dem Gehäuse (20) eine Positionserfassungsvorrichtung (72) angeordnet ist

6. Sicherheitsgurt-Vorrichtung (10) nach Anspruch 5, **dadurch gekennzeichnet, dass** die Positionserfassungsvorrichtung (72) in das Schleifringsystem (46) integriert ist.

7. Sicherheitsgurt-Vorrichtung (10) nach Anspruch 5 oder 6, **dadurch gekennzeichnet, dass** mit der Positionserfassungsvorrichtung (72) die Länge des abgerollten Sicherheitsgurts (14) ermittelt wird, und daraus in Verbindung mit weiteren Lagesensoren - beispielsweise des Sitzes, des Lenkrads oder der Pedale - Informationen über die Insassen-Statur ableitbar sind, die insbesondere für die zielgerechte Auslösung eines Airbag-Systems verwendet werden können.

8. Sicherheitsgurt-Vorrichtung (10) nach einem der vorhergehenden Ansprüche,
**dadurch gekennzeichnet, dass** die zur Erzeugung der Gurtvorspannung benötigte Vorspannkraft über eine Begrenzung des Motorstroms vorgebbar ist.

9. Sicherheitsgurt-Vorrichtung (10) nach einem der vorhergehenden Ansprüche,
**dadurch gekennzeichnet, dass** auf dem Rotor (34) mindestens ein Permanentmagnet drehfest gelagert ist, und an der Gurtrolle (12) elektrische Wicklungen (38) befestigt sind, die insbesondere elektrisch kommutierbar sind.

10. Sicherheitsgurt-Vorrichtung (10) nach einem der vorhergehenden Ansprüche,
**dadurch gekennzeichnet, dass** das Getriebe (60) als Planetengetriebe (61) oder Wolfromgetriebe (62) ausgebildet ist.

11. Sicherheitsgurt-Vorrichtung (10) nach einem der vorhergehenden Ansprüche,
**dadurch gekennzeichnet, dass** an der Gurtrolle (12) ein zweites Hohlzahnrad (82) konzentrisch zum gehäusefesten Hohlzahnrad (70) angeordnet ist, wobei die beiden Hohlzahnräder (70, 82) eine unterschiedliche Zähneanzahl (84) aufweise, und insbesondere das mindestens eine Planetenzahnrad (66) in beide axial benachbarten Holzahnräder (70, 82) greift.

12. Sicherheitsgurt-Vorrichtung (10) nach einem der vorhergehenden Ansprüche,
**dadurch gekennzeichnet, dass** die Rotorwelle (36) drehbar im Gehäuse (20), und die Gurtrolle (12) drehbar auf der Rotorwelle (36) gelagert ist.

13. Sicherheitsgurt-Vorrichtung (10) nach einem der Ansprüche 2 bis 12, **dadurch gekennzeichnet, dass** der Kommutator (40) als Trommelkommutator (41) oder als Plankommutator ausgebildet ist, und das Bürstensystem (44) entsprechend radial oder axial zum Kommutator (40, 41) angeordnet ist.

## Claims

1. Seatbelt apparatus (10) for a motor vehicle, comprising a housing (20), a belt reel (12), which is mounted in the housing in a rotatable manner, for winding up a seatbelt (14), a belt spring (16) having a belt lock (18), and also a belt pretensioner (30), which can be operated by means of an electric motor (32), for generating a belt pretension, with the electric motor (32) being arranged within the belt reel (12), and a rotor (34) of the electric motor (32) having a rotor shaft (36) being arranged within the belt reel (12), it being possible for the said rotor shaft to rotate relative to the belt reel (12), **characterized in that** the rotor (34) is operatively connected to the belt reel (12) by means of a non-self-locking gear mechanism (60), and the gear mechanism (60) has a hollow gear wheel (70) which is fixed to the housing, and at least one planetary gear wheel (66) is mounted in a rotatable manner on the belt reel (12) which serves as a crosspiece (68), and the at least one planetary gear (66) meshes with a sun gear (64) which is arranged on the rotor shaft (36) in a rotationally fixed manner.

2. Seatbelt apparatus (10) according to Claim 1, **characterized in that** electrical windings (38) with a commutator (40), are arranged on the rotor (34) and at least one stator magnet (52) and a brush system (44) are attached to the belt reel (12).

3. Seatbelt apparatus (10) according to Claim 2, **characterized in that** the stator magnets (52) bear directly against an inner wall (58) of the belt reel (12), and the belt reel (12) is in the form of a magnetic return path element (56).

4. Seatbelt apparatus (10) according to one of the preceding claims, **characterized in that** a slip ring system (46) is arranged on the belt reel (12), the said slip ring system establishing an electrical connection for a motor current between the housing (20), which is fixed to the vehicle body, and a brush system (44) which is arranged in a rotatable manner relative to the said housing.

5. Seatbelt apparatus (10) according to one of the preceding claims, **characterized in that** a position detection apparatus (72) is arranged between the belt reel (12) and the housing (20).

6. Seatbelt apparatus (10) according to Claim 5, **characterized in that** the position detection apparatus (72) is integrated in the slip ring system (46).

7. Seatbelt apparatus (10) according to Claim 5 or 6, **characterized in that** the position detection apparatus (72) is used to ascertain the length of the unrolled seatbelt (14), and information about the stature of an occupant can be derived from the said length in conjunction with further position sensors - for example of the seat, the steering wheel or the pedals -, it being possible to use the said information, in particular, for triggering an airbag system in a targeted manner.

8. Seatbelt apparatus (10) according to one of the preceding claims, **characterized in that** the pretensioning force which is required to generate the belt pretension can be prespecified by means of limiting the motor current.

9. Seatbelt apparatus (10) according to one of the preceding claims, **characterized in that** at least one permanent magnet is mounted on the rotor (34) in a rotationally fixed manner, and electrical windings (38) are attached to the belt reel (12), it being possible, in particular, to electrically commutate the said electrical windings.

10. Seatbelt apparatus (10) according to one of the preceding claims, **characterized in that** the gear mechanism (60) is in the form of a planetary gear mechanism (61) or a Wolfrom gear mechanism (62).

11. Seatbelt apparatus (10) according to one of the preceding claims, **characterized in that** a second hollow gear wheel (82) is arranged on the belt reel (12) in a manner concentric to the hollow gear wheel (70) which is fixed to the housing, with the two hollow gear wheels (70, 82) having a different number (84) of teeth and, in particular, the at least one planetary gear wheel (66) engaging in the two axially adjacent hollow gear wheels (70, 82).

12. Seatbelt apparatus (10) according to one of the preceding claims, **characterized in that** the rotor shaft (36) is mounted in the housing (20) in a rotatable manner and the belt reel (12) is mounted on the rotor shaft (36) in a rotatable manner.

13. Seatbelt apparatus (10) according to one of Claims 2 to 12, **characterized in that** the commutator (40) is in the form of a drum commutator (41) or a planar commutator, and the brush system (44) is accordingly arranged radially or axially relative to the commutator (40, 41).

## Revendications

1. Dispositif de ceinture de sécurité (10) pour un véhicule automobile, comprenant un boîtier (20), un rouleau de ceinture (12) monté rotatif dans le boîtier pour enrouler une ceinture de sécurité (14), un ressort de ceinture (16) avec un blocage de ceinture (18), ainsi qu'un enrouleur de ceinture (30) pouvant être actionné au moyen d'un moteur électrique (32), pour produire un prétensionnement de la ceinture, le moteur électrique (32) étant disposé à l'intérieur du rouleau de ceinture (12),
et un rotor (34) du moteur électrique (32) étant disposé avec un arbre de rotor (36) à l'intérieur du rouleau de ceinture (12), l'arbre de rotor pouvant tourner par rapport au rouleau de ceinture (12), **caractérisé en ce que**
le rotor (34) est en liaison fonctionnelle par le biais d'une transmission (60) sans auto-blocage avec le rouleau de ceinture (12), et la transmission (60) présente une couronne dentée (70) fixée au boîtier, et au moins un pignon planétaire (66) est monté à rotation sur le rouleau de ceinture (12) servant de porte-satellites (68), et l'au moins un pignon planétaire (66) s'engrenant avec une roue solaire (64) disposée fixe en rotation sur l'arbre de rotor (36).

2. Dispositif de ceinture de sécurité (10) selon la revendication 1, **caractérisé en ce que** des enroulements électriques (38) avec un commutateur (40) sont disposés sur le rotor (34), et au moins un aimant statorique (52) et un système de balais (44) sont fixés sur le rouleau de centre (12).

3. Dispositif de ceinture de sécurité (10) selon la revendication 2, **caractérisé en ce que** les aimants statoriques (52) s'appliquent directement contre une paroi intérieure (58) du rouleau de ceinture (12) et le rouleau de ceinture (12) est réalisé sous forme d'élément de reflux magnétique (56).

4. Dispositif de ceinture de sécurité (10) selon l'une quelconque des revendications précédentes, **caractérisé en ce qu'**un système de bagues collectrices (46) est disposé sur le rouleau de ceinture (12), lequel établit une connexion électrique pour un courant de moteur entre le boîtier (20) fixé à la carrosserie et un système de balais (44) disposé à rotation par rapport à lui.

5. Dispositif de ceinture de sécurité (10) selon l'une quelconque des revendications précédentes, **caractérisé en ce qu'**un dispositif de détection de position (72) est disposé entre le rouleau de ceinture (12) et le boîtier (20).

6. Dispositif de ceinture de sécurité (10) selon la revendication 5, **caractérisé en ce que** le dispositif de détection de position (72) est intégré dans le système de bague collectrices (46).

7. Dispositif de ceinture de sécurité (10) selon la revendication 5 ou 6, **caractérisé en ce que** la longueur de la ceinture de sécurité (14) déroulée est déterminée avec le dispositif de détection de position (72), et l'on peut en déduire, en association avec d'autres capteurs de position - par exemple du siège, du volant ou des pédales - des informations sur la stature de l'occupant, qui peuvent être utilisées notamment pour le déclenchement ciblé d'un système d'airbag.

8. Dispositif de ceinture de sécurité (10) selon l'une quelconque des revendications précédentes, **caractérisé en ce que** la force de précontrainte requise pour produire la précontrainte de la ceinture peut être prédéfinie par le biais d'une limitation du courant du moteur.

9. Dispositif de ceinture de sécurité (10) selon l'une quelconque des revendications précédentes, **caractérisé en ce qu'**au moins un aimant permanent est disposé fixe en rotation sur le rotor (34), et des enroulements électriques (38) sont fixés sur le rouleau de ceinture (12), lesquels peuvent notamment être commutés électriquement.

10. Dispositif de ceinture de sécurité (10) selon l'une quelconque des revendications précédentes, **caractérisé en ce que** la transmission (60) est réalisée sous forme de transmission planétaire (61) ou de transmission de Wolfrom (62).

11. Dispositif de ceinture de sécurité (10) selon l'une quelconque des revendications précédentes, **caractérisé en ce qu'**une deuxième couronne dentée (82) est disposée sur le rouleau de ceinture (12) concentriquement à la couronne dentée (70) fixée au boîtier, les deux couronnes dentées (70, 82) présentant un nombre de dents (84) différent, et notamment l'au moins un pignon planétaire (66) venant en prise dans les deux couronnes dentées axialement adjacentes (70, 82).

12. Dispositif de ceinture de sécurité (10) selon l'une quelconque des revendications précédentes, **caractérisé en ce que** l'arbre de rotor (36) est monté en rotation dans le boîtier (20), et le rouleau de ceinture (12) est monté en rotation sur l'arbre de rotor (36).

13. Dispositif de ceinture de sécurité (10) selon l'une quelconque des revendications 2 à 12, **caractérisé en ce que** le commutateur (40) est réalisé sous forme de commutateur à tambour (41) ou de commutateur plan, et le système de balais (44) est disposé de manière correspondante radialement ou axialement par rapport au commutateur (40, 41).
